# EUROPÄISCHE PATENTSCHRIFT

(11) **EP 1 697 722 B1**
(45) Veröffentlichungstag und Bekanntmachung des Hinweises auf die Patenterteilung: **04.03.2015**
(21) Anmeldenummer: 04804139.6
(22) Anmeldetag: 21.12.2004
(51) Int. Cl.: G01N 15/14

(54) **VERFAHREN UND VORRICHTUNG ZUR AUFNAHME MIKROSKOPISCHER BILDER**
METHOD AND DEVICE FOR RECORDING MICROSCOPIC IMAGES
PROCEDE ET DISPOSITIF POUR ENREGISTRER DES IMAGES MICROSCOPIQUES

(30) Priorität: 22.12.2003 DE 10361073
(43) Veröffentlichungstag der Anmeldung: 06.09.2006
(73) Patentinhaber: Innovatis AG, 33607 Bielefeld (DE)
(72) Erfinder: GUDERMANN, Frank, Theodor, 33335 Gütersloh (DE); STÜRZ, Marc, 33611 Bielefeld (DE)
(74) Vertreter: Von Kreisler Selting Werner - Partnerschaft von Patentanwälten und Rechtsanwälten mbB
(86) Internationale Anmeldenummer: PCT/EP2004/014542
(87) Internationale Veröffentlichungsnummer: WO 2005/062019

(56) Entgegenhaltungen:
- WO-A-02/04924
- US-A1- 2002 180 963
- US-A1- 2003 015 672
- US-A1- 2003 092 058
- US-B1- 6 319 468
- BRINKMANN MARLIES ET AL: "New technologies for automated cell counting based on optical image analysis 'The Cellscreen'." CYTOTECHNOLOGY, Bd. 38, Nr. 1-3, 2002, Seiten 119-127, XP002328794 ISSN: 0920-9069
- YANG J ET AL: "CELL SEPARATION ON MICROFABRICATED ELECTRODES USING DIELECTROPHORETIC/GRAVITATIONAL FIELD-FLOW FRACTIONATION" ANALYTICAL CHEMISTRY, AMERICAN CHEMICAL SOCIETY. COLUMBUS, US, Bd. 71, Nr. 5, 1. März 1999 (1999-03-01), Seiten 911-918, XP000825768 ISSN: 0003-2700

## Beschreibung

Die Erfindung befasst sich mit der Erzeugung mikroskopischer Bilder durch Scannen einer Messzelle mit einem optischen Sensor. Bei der Messzelle handelt es sich um eine Durchflussküvette. Zur Vereinfachung ist nachfolgend nur letztere genannt.

Die innovatis AG entwickelt, produziert und vertreibt Geräte zur Partikel- und Zellanalyse. Zur Analyse der Zelldichte, zur Klassifizierung in lebende und tote Zellen und zur Bestimmung von Objektdurchmesser und Objektgeometrie werden Bilder von Partikeln oder Zellen aufgenommen. Die Objekte befinden sich während der Analyse in einer optisch geeigneten Küvette in Suspension.

### Stand der Technik

Die bisher auf dem Markt bestehenden, automatischen Systeme zur Untersuchung von Dichte, Viabilität und Durchmesser zellhaltiger Suspensionen biologischen Ursprungs basieren auf der Messung des elektrischen Widerstandes, der elektrischen Kapazität, der Laserdiffraktometrie oder der optischen Bildanalyse.

Die Auswertung von Objekten mittels optischer Bildaufnahme und einer digitalen Bildanalyse wurde bisher durch die Verwendung eines Mikroskops realisiert, wobei eine Mikroskop-Optik zur Vergrößerung der teilweise nur wenige Mikrometer kleinen Objekte benutzt wird. Das so erzeugte Bild wird mit einer Digitalkamera aufgenommen und von speziellen Computer-Programmen ausgewertet.

Als Beispiel für das herkömmlich angewendete, automatische Verfahren ist das Cedex System (innovatis AG) zu nennen. Dieses System arbeitet mit einer angepassten Mikroskop-Optik, die es ermöglicht, Zelldichten und Viabilitäten von Suspensionszellen zu bestimmen. Nach demselben Prinzip wird eine Analyse der Zellkultur durch das nachfolgend entwickelte Vi-CELL System (Beckman Coulter Inc.) durchgeführt. Das zugrundeliegende Verfahren ist durch drei Parameter limitiert, die es nicht erlauben unterhalb einer bestimmten Objektgröße zu detektieren:

### 1. Tiefenschärfe

Um mit Hilfe einer Mikroskop-Optik Objekte in einer Durchflussküvette aufnehmen zu können, müssen über die gesamte Küvettenhöhe hin die Objekte hinreichend scharf abgebildet werden.

### 2. Küvettenhöhe

Die Küvette muss so groß sein, dass genügend Objekte für eine statistische Signifikanz aufgenommen werden, und gleichzeitig klein genug, um die Tiefenschärfe über den gesamten Bereich der Küvettenhöhe zu ermöglichen.

### 3. Objektanzahl

Durch die Methode der Bildaufnahme ist es nicht möglich unterhalb einer Objektdichte von 5 x 104 Objekten pro mL Suspension zu detektieren, ohne den Bereich der statistischen Signifikanz zu verlassen.

Da die Tiefenschärfe proportional zu 1/NA2 , die optische Auflösung proportional zu 1/NA ist (mit NA = Numerische Apertur), nimmt bei Verkleinerung der Auflösung um detailreichere Bilder zu erhalten die Tiefenschärfe quadratisch dazu ab.

Bei dem herkömmlich angewendeten Verfahren wird die Messküvette mit dem Probenmaterial komplett gefüllt und mit der Mikroskop-Optik eine Tiefenschärfe eingestellt, die sich über den gesamten Bereich der Küvettenhöhe erstreckt. Um den Bereich der statistischen Signifikanz zu erreichen, müssen entsprechend viele Bilder der Probe durch sukzessive Befüllung der Küvette aufgenommen werden.

In der EP 1 329 706 A1 wird ein Verfahren beschrieben, bei dem sich die Probe über die gesamte Küvettenhöhe erstreckt. Die Auflösung des Systems und somit die minimal erforderliche Größe der zu analysierenden Partikel ist beschränkt durch die Tiefenschärfe, die erforderlich ist, um die Probe über die gesamte Küvettenhöhe scharf abzubilden. Die digitale Bildaufnahme erfolgt mittels Kamera, nicht durch einen Scanner. Dieses Patent aus dem Jahr 2003 beschreibt die Funktionsweise des oben genannten Cedex Systems, welches bereits 1997 veröffentlicht wurde (Animal Cell Technology, Proceedings of the 14th Meeting of ESACT, Kluwer Academic Publishers, 1997, Seite 301-305).

In der DE 41 16 313 C2 erfolgt die Sedimentation mehrerer Proben gleichzeitig durch eine Zentrifuge. Ziel des Verfahrens ist die Bestimmung elastomechanischer Eigenschaften von Sedimenten aus Suspensionen und Emulsionen.

In der US 6,141,624 A wird beschrieben, wie eine ausreichende Probenmenge zum Nachweis unterschiedlicher Partikel mittels einer Durchflussküvette automatisch zur Verfügung gestellt werden kann.

Marlies Brinkmann et al. offenbaren in Cytotechnology 38: 119-127, 2002 neue Technologien für die automatisierte Zellzählung basierend auf optischer Bildanalyse. Dort wird eine Vorrichtung und ein Verfahren zur Aufnahme mikroskopischer Bilder von Zellen mit einem EX 50 Mikroskop, einer CCD-Kamera und einem XY-Tisch beschrieben. Optischer Sensor und Messzelle bewegen sich relativ zueinander.

US-A-20030092058 betrifft ein Flusscytometer mit einem versiegelten Einmalbehälter, der rotiert wird. Durch die Rotation werden Zellen an die innere Oberfläche des Containers dirigiert, wo dann die Analyse stattfindet.

US-A-6,319,468 B1 offenbart ein auf Affinitätsbindungen basierendes System zur Detektion von Partikeln in einer Flüssigkeit. Die Detektion erfolgt unter anderem im Durchfluss.

Yang et al. beschreiben in Anal. Chem. 1999, 71, 911-918 eine Zelltrennung auf Elektroden mittels dielektrophoretischer/schwerkraftmäßiger Field-Flow-Fraktionierung.

US 2003/015672 A1 offenbart ein mikrofluidisches System, in dem ein optischer Sensor während seiner Verwendung ausgerichtet werden kann. Desweiteren wird eine Durchflusskette mit Reaktionskanälen offenbart, durch die Zellen oder andere Materialien fließen. Der optische Sensor kann ein Mikroskopobjektiv oder ein bildgebendes System enthalten. Eine Lichtquelle und der Detektor sind entlang der Messzelle bewegbar.

US 2002/180963 A1 offenbart eine mikrofluidische Durchflusszelle und eine CCD-Kamera, die entlang des Messkanals bewegbar ist.

### Aufgabe

Aufgabe der vorliegenden Erfindung ist es insbesondere, ein Verfahren und eine Vorrichtung zur Aufnahme von Bildern im mikroskopischen Bereich zu schaffen, durch die eine hohe optische Auflösung erzielbar ist. Weitere Aufgabenstellungen ergeben sich aus den insgesamt dargestellten Lösungen und Vorteilen.

### Erfindung

Die Merkmale der Erfindung sind in den unabhängigen Ansprüchen wiedergegeben. Weitere Merkmale der Erfindung bzw. vorteilhafte Weiterbildungen derselben sind in den Unteransprüchen und in der Beschreibung genannt.

Erfindungsgemäß ist die Kombination der folgenden Methoden vorgesehen:
- Einbringen einer Probe in eine Durchflussküvette
- Sedimentation der Probe
- Digitale Bildaufnahme mittels Scanner
- Analysieren der Partikel in der Probe durch Auswertung der Bildaufnahme Dadurch unterscheidet es sich von den genannten herkömmlichen Verfahren.

An Stelle einer Mikroskop-Optik mit Autofokus-Mechanik und -Elektronik sowie einer Digitalkamera (gegebenenfalls mit Framegrabber) wird ein Scanner verwendet, der insbesondere alle Funktionen der zuvor genannten herkömmlichen Komponenten ersetzen kann.

Mit Hilfe das Scanners kann, im Vergleich zu herkömmlichen Verfahren, in einem kurzen Zeitraum mehr Bilddatenmaterial aufgenommen werden. Ist die Probenkammer entsprechend groß, so hat man einen enormen Zeitgewinn, der es erlaubt, die Objekte absinken zu lassen, und in einem geringeren Fokusbereich zu agieren, und damit die optische Auflösung zu erhöhen. Mit diesem Verfahren können dann viel kleinere Objekte oder Partikel analysiert werden.

Kurzbeschreibung der Figuren:
Abbildung 1: Schemazeichnung des herkömmlichen Bildaufnahmeverfahrens
Abbildung 2: Schemazeichnung des Scanner Bildaufnahmeverfahrens
Abbildung 3: Schemazeichnung Durchlicht-Verfahren

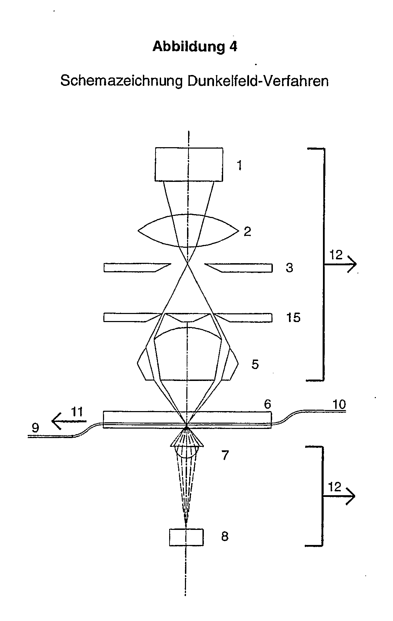

Abbildung 4: Schemazeichnung Dunkelfeld-Verfahren

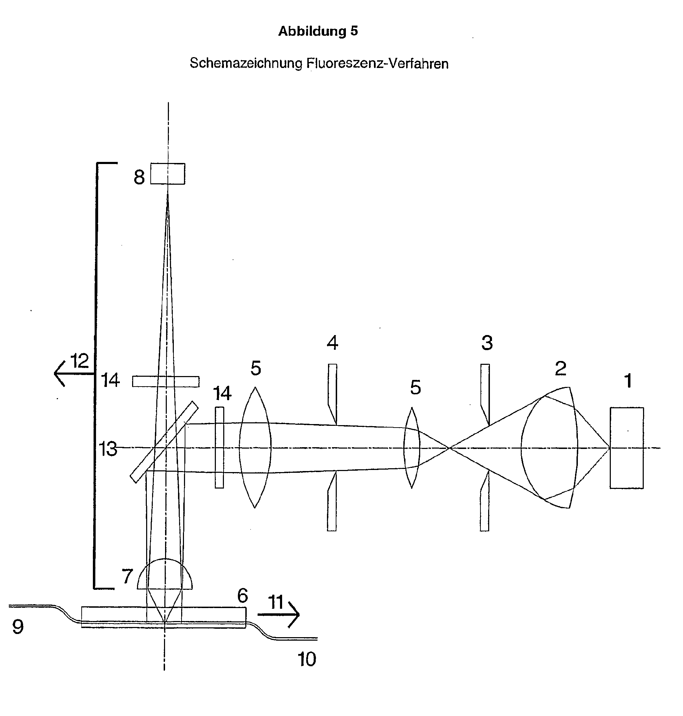

Abbildung 5: Schemazeichnung Fluoreszenz-Verfahren

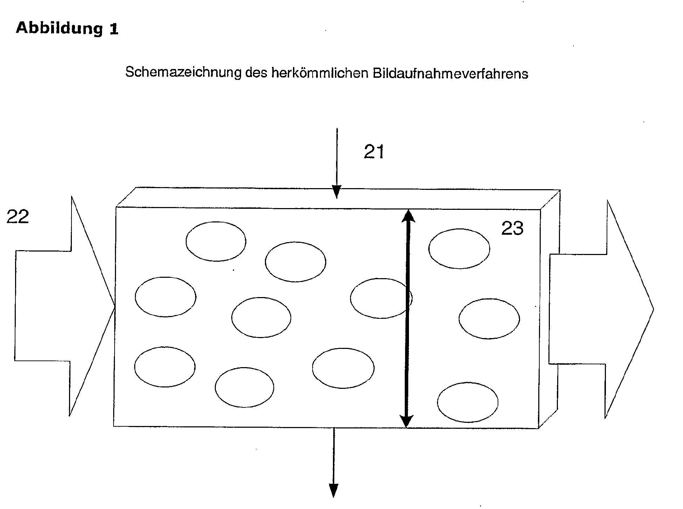

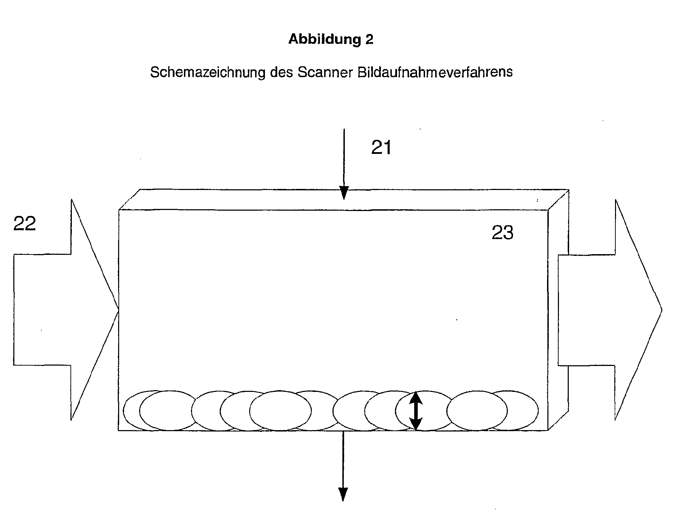

Abbildungen 1 und 2 zeigen schematisch das herkömmliche und das neue Bildaufnahmeverfahren. Beide Bilder zeigen jeweils eine Durchflussküvette (23) mit optischer Achse (21) und Durchflussrichtung (22). Der senkrechte Doppelpfeil zeigt den für eine optimale Bildaufnahme benötigten Tiefenschärfebereich an.

Da ein reziprok quadratischer Zusammenhang besteht, wird bei dem neuen Verfahren die höhere optische Auflösung bei geringerer Tiefenschärfe gewählt, um Bilder des Probenmaterials in der Durchflussküvette aufzunehmen. Dies wäre bei herkömmlichen Verfahren nur in einem nicht vertretbaren Zeitrahmen durchführbar.

Das von der erfindungsgemäßen Vorrichtung gelieferte Bilddatenmaterial kann nachfolgend einer Bilddatenanalyse zugeführt werden.

Der wesentliche Vorteil der Vorrichtung ist es, dass eine hohe optische Auflösung einer Partikel- oder Zellsuspension erzielt wird. Dies wird u.a. durch Absinken der Objekte auf eine optische Ebene bei gleichzeitig hohem Probenvolumen erreicht. Das Absinken der Objekte kann durch Sedimentation oder weitere geeignete Verfahren erfolgen.

Die unterschiedlichen Techniken zur Ansammlung von Objekten innerhalb der Messküvette können sein:
- Adhäsion
- Repulsion
- Elektrische Wirkung
- Magnetische Wirkung
- Gravitation
- Zentrifugation
- Auftrieb
- Immobilisation
- Kopplung
sowie Kombinationen aus diesen Methoden.

Die Vorrichtung eignet sich für mikroskopische Aufnahmen unter Auflicht, Durchlicht, Fluoreszenz, Phasenkontrast, Dunkelfeld und Licht im sichtbaren und nicht-sichtbaren Bereich sowie alle daraus möglichen Kombinationen. Es kann des weiteren die dem aktuellen Stand der Technik entsprechenden weiteren Kontrastverfahren beinhalten.

Die zu untersuchenden Proben können Partikellösungen oder Zelimaterial biologischen Ursprungs sein, das sowohl ungefärbt als auch gefärbt untersucht werden können.

Es wird eine Bestimmung der Konzentration und Viabilität zellhaltiger biologischer Proben einer Kultursuspension sowie Apoptoseverhalten, Produktkonzentration und Analyse intrazellulärer Kompartimente und Stoffwechselvorgänge durchgeführt.

Es werden darüber hinaus folgende Parameter bestimmt: Durchmesser einzelner Objekte, Aggregationsrate, Geometrie, Anzahl der gezählten Objekte und Abweichung vom Mittelwert sowie Oberflächenbeschaffenheit und Morphologie.

Die Ergebnisdaten und Parameter werden mittels eines Computer-Verfahrens aus den aufgenommenen Bilddaten ermittelt.

Basis der Messung ist ein Verfahren (Mikroskopieverfahren und andere), bei dem die partikel-/zellhaltige Probe durch eine Küvette fließt (Durchflussküvette). Es werden mit einem optischen Zeilen- oder Flächensensor digitale Bilder der Probe in der Küvette aufgenommen, die dann mit einem Verfahren zur optischen Bildanalyse ausgewertet werden.

Die prinzipielle Idee ist es, eine Vorrichtung (Scanner) so zu konstruieren, dass er die entsprechende Auflösung liefert, um auch im Mikrometer-Maßstab qualitativ hochwertig abbilden zu können. Dieses wird durch eine veränderte Optik, angepasste Autofokusverfahren und eine modifizierte Mechanik erreicht.

Die Bildaufnahme erfolgt durch eine Bewegung der Scannereinheit relativ zur Partikelprobe. Dazu befindet sich die Küvette senkrecht im optischen Pfad.

Die Ausleserate des optischen Sensors wird mit der Verfahrgeschwindigkeit synchronisiert, so dass ein oder mehrere Bilder entstehen.

Im Folgenden wird ein möglicher Ablauf des Verfahrens aufgelistet und erläutert
- Einbringen der Probe in die Messküvette
- Absinken der Objekte der Probe in der Lösung
   Ansammlung der Objekte in einer optischen Ebene. Beispielhaft wird dieser Vorgang im Weiteren als Sedimentation bezeichnet.
- Scannen
   Digitale Bildaufnahme unter Berücksichtigung eines ausreichenden Volumens des Probenvolumens, um mit einem Bild ein statistisch repräsentatives Ergebnis erzielen zu können (siehe auch Abschnitt "Stand der Technik").
- Analyse des Bilddatenmaterials
   Speziell angepasste Analyse des Bilddatenmaterials zur Ergebnisermittlung.
- Anzeige und Export der Analysedaten
   Benutzerfreundliche Präsentation der Ergebnisdaten als Zahlenwerte sowie als grafische Anzeige.

Mit diesem Verfahren ist es möglich, dass einzelne Objekte analysiert werden. Für den Fall der Analyse von Zellmaterial biologischen Ursprungs kann eine Analyse von Morphologie, Oberflächenbeschaffenheit etc. erfolgen.

Der durch die Integration einer Scannereinheit zur optischen Bilderfassung erzielte Nutzen ist gegeben durch die Vergrößerung des Detektionsbereichs. Eine entsprechende Scanneroptik kann von der Auflösung her deutlich geringere Objektdurchmesser analysieren, als es mit dem heutigen Stand der Technik möglich ist. Es können zusätzliche Informationen über Struktur und Morphologie der Objekte gewonnen werden.

Durch die Methode der Sedimentation kann es nun erstmals ermöglicht werden, dass alle Objekte einer Probe auf einmal aufgenommen und analysiert werden.

Da durch geeignete Wahl der Messküvette pro Volumeneinheit eine größere Objektanzahl ausgewertet werden kann, wird für das zur Anmeldung vorliegende Verfahren ein geringeres Probenvolumen benötigt, als es bei den Systemen aktueller Bauart üblich ist.

### Beispielbeschreibung

Dem beschriebenen Verfahren liegen mikroskopische Aufnahmen zu Grunde, die unter unterschiedlichen Bedingungen generiert wurden: Auflicht, Durchlicht, Fluoreszenzlicht, Phasenkontrast, weitere Kontrastverfahren, Dunkelfeld und Licht im sichtbaren und nicht-sichtbaren Bereich, sowie alle daraus möglichen Kombinationen.

Als Beispiel dazu sind im Folgenden mehrere mikroskopische Aufnahmeverfahren beschrieben. Für die Realisierung des Verfahrens können diese und weitere lichtgebende Verfahren miteinander kombiniert werden.

Die zu untersuchende Probenlösung / Suspension befindet sich in einer Küvette als Messzelle. Nach dem Einbringen des Zellmaterials wird gewartet, bis die zu untersuchenden Objekte auf den Küvettenboden sedimentieren. Dann wird ein Bild aufgenommen. Während der Bildaufnahme bewegt sich die Scannereinheit relativ zur Partikelprobe. Der Bereich der Küvette, der dabei aufgenommen wird, ist variabel.

### Beispiel (a) Durchlicht-Verfahren

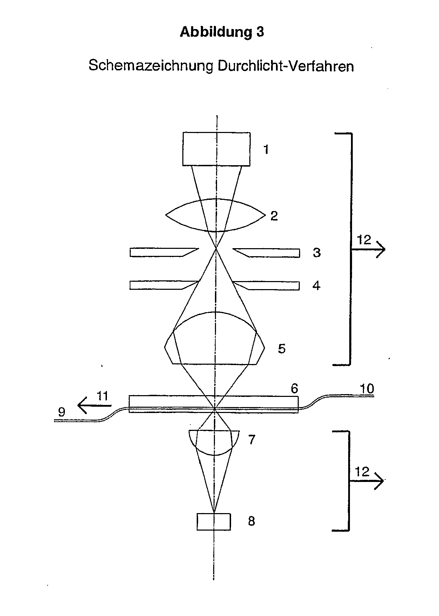

Ein Ausführungsbeispiel der Erfindung für Durchlicht-Aufnahmen ist in Abb. 3 dargestellt und wird nachfolgend beschrieben.

Der optische Sensor 8 befindet sich auf der einen Seite der Küvette 6, die Lichtquelle 1 auf der gegenüberliegenden Seite. Für die Bündelung der Lichtstrahlen und zur Vergrößerung der Abbildung werden Beleuchtungsoptik 2, 3, 4, 5 und Objektiv 7 in den optischen Pfad eingebracht Die Beleuchtungsoptik besteht aus Kollektorlinse 2, Leuchtfeldblende 3, Kondensorblende 4 und Kondensoroptik 5. Zusätzlich können mehrere Filter in den optischen Pfad eingebracht werden. Zur Beschickung der Küvette 6 mit der Probenlösung wird diese durch die Einlasskapillare 9 zugeführt und durch die Auslasskapillare 10 abgeführt. Die Bildaufnahme erfolgt entweder durch Bewegung der Scannereinheit 12 relativ zur Partikelprobe 11, welche die Bauteile 1-5 und 7-8 aufweist.

### Beispiel (b) Dunkelfeldverfahren

Der optische Sensor 8 befindet sich auf der einen Seite der Küvette 6, die Lichtquelle 1 auf der gegenüberliegenden Seite. Für die Bündelung der Lichtstrahlen und zur Vergrößerung der Abbildung werden Beleuchtungsoptik, bestehend aus Kollektorlinse 2, Leuchtfeldblende 3 und Dunkelfeldblende 15, Kondensoroptik 5 und Objektiv 7 in den optischen Pfad eingebracht. Zusätzlich können mehrere Filter in den optischen Pfad eingebracht werden. Zur Beschickung der Küvette 6 mit der Probenlösung wird diese durch die Einlasskapillare 9 zugeführt und durch die Auslasskapillare 10 abgeführt. Die Bildaufnahme erfolgt durch Bewegung der Scannereinheit 12 relativ zur Partikelprobe 11 welche auch hier die Bauteile 1-5 und 7-8 aufweist.

### Beispiel (c) Fluoreszenz-Verfahren

Für Aufnahmen von Fluoreszenz-Bildem im Auflicht-Verfahren wird das von der Probe kommende Licht zum optischen Sensor geleitet, nachdem es den Strahlenteiler 3 passiert hat, der das Licht zur Probenbeleuchtung in den optischen Pfad einkoppelt.

Der optische Sensor 8 befindet sich auf einer optischen Achse mit der Küvette 6. Die Strahlen der Lichtquelle 1 werden mittels Beleuchtungsoptik gebündelt und kollimiert, bevor sie durch den Strahlenteiler 13 über das Objektiv 4 die Probe in der Küvette 6 beleuchten. Die Beleuchtungsoptik besteht aus Kollektorlinse 2 und Leuchtfeldblende 3 sowie weiteren Linsen 5 und einer weiteren Blende 4. Zusätzlich können entsprechende Filter 14 in den optischen Pfad eingebracht werden. Zur Beschickung der Küvette 6 mit der Probenlösung wird diese durch die Einlasskapillare 9 zugeführt und durch die Auslasskapillare 10 abgeführt. Die Bildaufnahme erfolgt entweder durch Bewegung der Scannereinheit 12 relativ zur Partikelprobe 11.

### Beispiel (d)

Es sollen Anzahl und Viabilität kleiner Partikel, z.B. suspendierter Blutzellen oder Hefen, in einer Probe bestimmt werden. Es liegt ein Probenvolumen von etwa 500 *µ*l vor. Zur Bestimmung der Viabilität wird die Probe eingefärbt.

Die Probe wird in die Küvette verbracht, wo die Partikel in der Probe eine bestimmte Zeit lang sedimentieren. Die einzuhaltende Sedimentationszeit hängt vom jeweiligen Sedimentationsverhalten der Partikel in der jeweiligen Suspension, d.h. Dichte der Partikel und Viskosität der Suspension, der Küvettenhöhe sowie der Tiefenschärfe der Bildaufnahmeoptik ab.

Nach Ablauf der Sedimentationszeit befinden sich ein repräsentativer Anteil der Partikel auf bzw. in einer durch die optischen Eigenschaften des Systems zulässigen Höhe über dem Küvettenboden, so dass eine ausreichend scharfe Abbildung aller Partikel möglich ist. Zu diesem Zeitpunkt sind außerdem die Partikelbewegungen in Fließrichtung und in Sedimentationsrichtung soweit abgeklungen, dass die verzerrungsfreie Bildaufnahme mit einem Zeilensensor (Scanner) erfolgen kann.

Jetzt erfolgt die digitale Bildaufnahme der gesamten Probe in einem Schritt. Die so gewonnenen Bilddaten werden digital aufbereitet und mit bekannten Verfahren analysiert. Als Ergebnis erhält man Partikelkonzentration und Viabilität sowie weitere Merkmale der Partikel, wie z.B. den Durchmesser.

### Bezugszeichenliste

- 1: Lichtquelle
- 2: Kollektorlinse
- 3: Leuchtfeldblende
- 4: Kondensorblende
- 5: Kondensoroptik
- 6: Küvette
- 7: Objektiv
- 8: Sensor
- 9: Einlasskapillare
- 10: Auslasskapillare
- 11: Partikelprobe
- 12: Scannereinheit
- 13: Strahlenteiler
- 14: Filter
- 15: Dunkelfeldblende
- 21: Achse
- 22: Durchflussrichtung
- 23: Durchflussküvette

## Patentansprüche

1. Verfahren zur Aufnahme mikroskopischer Bilder mit hoher optischer Auflösung von in einer Flüssigkeit suspendierten Partikeln oder Organismen, **dadurch gekennzeichnet, dass** die Suspension in eine Durchflussküvette (6) eingebracht wird,
nach dem Einbringen der Suspension die enthaltenen Partikel nach Einhalten einer Sedimentationszeit zunächst auf den Boden der Durchflussküvette (6) oder in einen Bereich oberhalb des Bodens absinken,
wodurch nur noch ein Teil der Durchflussküvette (6) die zu untersuchenden Partikel oder Organismen enthält, so dass dieser Bereich mit einer hohen optischen Auflösung abgebildet und vom optischen Sensor (8) erfasst werden kann und das Bild der Suspension von einem optischen Sensor (8) aufgenommen wird, wobei sich der optische Sensor (8) entlang der Durchflussküvette (6) bewegt und der Inhalt der Durchflussküvette (6) dabei ganz oder teilweise abgebildet wird.

2. Verfahren nach Anspruch 1, **dadurch gekennzeichnet, dass** sich der Sensor (8) mit optischen Elementen und einer Lichtquelle (1) entlang der Durchflussküvette (6) bewegt.

3. Verfahren nach Anspruch 1 oder 2, **dadurch gekennzeichnet, dass** die Durchflussküvette (6) durch die Bewegung optischer Elemente ganz oder teilweise auf den optischen Sensor (8) abgebildet wird.

4. Verfahren nach Anspruch 1 oder einem der weiteren Ansprüche, **dadurch gekennzeichnet, dass** die Lichtquelle (1) und gegebenenfalls Blenden- und Linsensysteme (2, 3, 4, 5) auf einer Seite der Durchflussküvette, Objektiv (7) und gegebenenfalls Blendensysteme und der optische Sensor (8) auf der anderen, gegenüberliegenden Seite der Durchflussküvette (6) angeordnet sind.

5. Verfahren nach Anspruch 1, 2 oder 3, **dadurch gekennzeichnet, dass** die Lichtquelle (1) und gegebenenfalls Blenden- und Linsensysteme (2, 3, 4, 5) auf derselben Seite der Durchflussküvette (6) angeordnet sind, wie Objektiv (7) und gegebenenfalls Blenden und der optische Sensor (8).

6. Verfahren nach Anspruch 4, **dadurch gekennzeichnet, dass** die Durchlichtbeleuchtung als Hellfeldbeleuchtung, oder als Phasenkontrastbeleuchtung mit den bekannten Phasenkontrastverfahren auslegbar ist.

7. Verfahren nach Anspruch 5, **dadurch gekennzeichnet, dass** die Auflichtbeleuchtung als Fluoreszenzbeleuchtung mit den bekannten Fluoreszenzverfahren ausgelegt werden kann.

8. Verfahren nach Anspruch 6, **dadurch gekennzeichnet, dass** eine geeignete Lichtquelle (1) oder Einbringen eines oder mehrerer geeigneter Filter es ermöglicht, die Objekte in der Durchflussküvette (6) mit einer definierten spektralen Intensitätsverteilung des einfallenden Lichtes zu beleuchten.

9. Verfahren nach Anspruch 6, 7 oder 8, **dadurch gekennzeichnet, dass** eine geeignete Lichtquelle (1) oder Einbringen eines oder mehrerer geeigneter Filter es ermöglicht, den optischen Sensor (8) mit einer definierten spektralen Intensitätsverteilung des einfallenden Lichtes zu beleuchten.

10. Verfahren nach Anspruch 6, 7 oder 8, **dadurch gekennzeichnet, dass** die in den Ansprüchen genannten Beleuchtungsarten auch in den daraus resultierenden möglichen Kombinationen angewendet werden können.

11. Verfahren nach Anspruch 1, **dadurch gekennzeichnet, dass** die zu untersuchende Suspension mit Farbstoffen versetzt ist.

12. Verfahren nach Anspruch 1, **dadurch gekennzeichnet, dass** alle oder ein Teil der eingesetzten Filter oder eingesetzten Objektiv (7) automatisch oder manuell gewechselt werden.

13. Vorrichtung zur Durchführung des Verfahrens nach Anspruch 1 mit einer Lichtquelle (1) und einer Durchflussküvette (6) zur Aufnahme mikroskopischer Bilder mit hoher optischer Auflösung von in einer Flüssigkeit suspendierten Partikeln oder Organismen, wobei die Suspension in die Durchflussküvette (6) einbringbar ist und die Bilder von einem optischen Sensor (8) aufgenommen werden, **dadurch gekennzeichnet, dass** der optische Sensor (8) während der Bildaufnahme entlang der Durchflussküvette (6) bewegbar und der Inhalt der Messzelle dabei ganz oder teilweise abbildbar ist.

14. Vorrichtung nach Anspruch 13, **dadurch gekennzeichnet, dass** die Lichtquelle (1) und gegebenenfalls Blenden- und Linsensysteme (2, 3, 4, 5) auf einer Seite der Durchflussküvette (6), Objektiv (7) und gegebenenfalls Blendensysteme und der optische Sensor (8) auf der anderen, gegenüberliegenden Seite der Durchflussküvette (6) angeordnet sind.

15. Vorrichtung nach Anspruch 13, **dadurch gekennzeichnet, dass** die Lichtquelle (1) und gegebenenfalls Blenden- und Linsensysteme (2, 3, 4, 5) auf derselben Seite der Durchflussküvette (6) angeordnet sind, wie Objektiv (7) und gegebenenfalls Blenden und der optische Sensor (8).

## Claims

1. A method for recording microscopic images with high optical resolution of particles or organisms suspended in a liquid, **characterized in that** the suspension is introduced in a flow cuvette (6),
after said introducing of the suspension, the particles contained first sink onto the ground of the flow cuvette (6) or into a region above the ground, after a sedimentation period has been observed;
whereby only part of the flow cuvette (6) contains the particles or organisms to be examined, so that this region can be imaged with a high optical resolution and covered by the optical sensor (8), and the image of the suspension is recorded by an optical sensor (8), wherein said optical sensor (8) moves along said flow cuvette (6) while the contents of the flow cuvette (6) are imaged completely or in part.

2. The method according to claim 1, **characterized in that** said sensor (8) moves along said flow cuvette (6) together with optical elements and a light source (1).

3. The method according to claim 1 or 2, **characterized in that** said flow cuvette (6) is imaged completely or in part onto said optical sensor (8) by the movement of optical elements.

4. The method according to claim 1 or any of the further claims, **characterized in that** said light source (1) and optional screen and lens systems (2, 3, 4, 5) are situated on one side of the flow cuvette, and the objective (7) and optional screen systems and said optical sensor (8) are located on the other, opposite side of the flow cuvette (6).

5. The method according to claim 1, 2 or 3, **characterized in that** said light source (1) and optional screen and lens systems (2, 3, 4, 5) are situated on the same side of the flow cuvette (6) as the objective (7) and optional screens and said optical sensor (8).

6. The method according to claim 4, **characterized in that** the transmitted light illumination can be realized as a bright field illumination, or as a phase contrast illumination with the known phase contrast methods.

7. The method according to claim 5, **characterized in that** said incident light illumination can be realized as a fluorescence illumination with the known fluorescence methods.

8. The method according to claim 6, **characterized in that** a suitable light source (1) or the insertion of one or more suitable filters enables the objects in the flow cuvette (6) to be illuminated with a defined spectral intensity distribution of the incident light.

9. The method according to claim 6, 7 or 8, **characterized in that** a suitable light source (1) or the insertion of one or more suitable filters enables the optical sensor (8) to be illuminated with a defined spectral intensity distribution of the incident light.

10. The method according to claim 6, 7 or 8, **characterized in that** the illumination modes mentioned in the claims may also be employed in the possible combinations resulting therefrom.

11. The method according to claim 1, **characterized in that** the suspension to be examined has been admixed with stains.

12. The method according to claim 1, **characterized in that** all or part of the filters employed or objectives employed (7) are changed automatically or manually.

13. A device for performing the method according to claim 1, comprising a light source (1) and a flow cuvette (6) for recording microscopic images with high optical resolution of particles or organisms suspended in a liquid, wherein the suspension can be introduced in the flow cuvette (6), and the images are recorded by an optical sensor (8), **characterized in that** said optical sensor (8) is movable along said flow cuvette (6) during the recording of the image, and the contents of the measuring cell can be imaged completely or in part thereby.

14. The device according to claim 13, **characterized in that** said light source (1) and optional screen and lens systems (2, 3, 4, 5) are situated on one side of the flow cuvette (6), the objective (7) and optional screen systems and said optical sensor (8) are located on the other, opposite side of the flow cuvette (6).

15. The device according to claim 13, **characterized in that** said light source (1) and optional screen and lens systems (2, 3, 4, 5) are situated on the same side of the flow cuvette (6) as the objective (7) and optional screens and said optical sensor (8).

## Revendications

1. Procédé d'enregistrement d'images microscopiques de haute résolution optique de particules ou organismes en suspension dans un liquide, **caractérisé en ce que**
la suspension est introduite dans une cuvette de circulation (6),
une fois la suspension introduite, les particules qu'elle contient précipitent au bout d'un certain temps de sédimentation sur le fond de la cuvette de circulation (6) ou dans une région située au-dessus du fond,
de sorte que une partie seulement de la cuvette de circulation (6) contient les particules ou organismes à étudier de sorte que cette région peut être détectée par le capteur optique (8) et représentée par une image de haute résolution optique et l'image de la suspension est enregistrée par un capteur optique (8), le capteur optique (8) se déplaçant le long de la cuvette de circulation (6) et le contenu de la cuvette de circulation (6) étant alors totalement ou partiellement représenté par une image.

2. Procédé selon la revendication 1, **caractérisé en ce que** le capteur (8) se déplace avec des éléments optiques et une source de lumière (1) le long de la cuvette de circulation (6).

3. Procédé selon la revendication 1 ou 2, **caractérisé en ce que** la cuvette de circulation (6) est représentée totalement ou partiellement par une image sur le capteur optique (8)par la déplacement d'éléments optiques.

4. Procédé selon la revendication 1 ou l'une des autres revendications, **caractérisé en ce que** la source de lumière (1) et éventuellement des systèmes de diaphragmes et lentilles (2, 3, 4, 5) sont disposés d'un côté de la cuvette de circulation, l'objectif (7) et éventuellement des systèmes de diaphragmes et le capteur optique (8) sont disposés de l'autre côté opposé de la cuvette de circulation (6).

5. Procédé selon la revendication 1, 2 ou 3, **caractérisé en ce que** la source de lumière (1) et éventuellement des systèmes de diaphragmes et lentilles (2, 3, 4, 5) sont disposés du même côté de la cuvette de circulation (6) que l'objectif (7) et éventuellement les diaphragmes et le capteur optique (8).

6. Procédé selon la revendication 4, **caractérisé en ce que** l'éclairage par lumière transmise peut être configuré sous la forme d'un éclairage sur fond clair ou d'un éclairage par contraste de phase avec les procédés à contraste de phase connus.

7. Procédé selon la revendication 5, **caractérisé en ce que** l'éclairage incident peut être configuré sous la forme d'un éclairage fluorescent avec les procédés de fluorescence connus.

8. Procédé selon la revendication 6, **caractérisé en ce qu'**une source de lumière (1) appropriée ou l'insertion d'un ou plusieurs filtres appropriés permet d'éclairer les objets se trouvant dans la cuvette de circulation (6) avec une distribution d'intensité spectrale définie de la lumière incidente.

9. Procédé selon la revendication 6, 7 ou 8, **caractérisé en ce qu'**une source de lumière (1) appropriée ou l'insertion d'un ou plusieurs filtres appropriés permet d'éclairer le capteur optique (8) avec une distribution d'intensité spectrale définie de la lumière incidente.

10. Procédé selon la revendication 6, 7 ou 8, **caractérisé en ce que** les types d'éclairage mentionnés dans les revendications peuvent également être appliqués dans les combinaisons résultantes possibles.

11. Procédé selon la revendication 1, **caractérisé en ce que** la suspension à étudier est mélangée à des colorants.

12. Procédé selon la revendication 1, **caractérisé en ce que** tout ou partie des filtres ou de l'objectif (7) utilisés sont remplacés automatiquement ou manuellement.

13. Dispositif de mise en oeuvre du procédé selon la revendication 1, ledit dispositif comprenant une source de lumière (1) et une cuvette de circulation (6) afin d'enregistrer des images microscopiques de haute résolution optique de particules ou d'organismes en suspension dans un liquide, la suspension pouvant être introduite dans la cuvette de circulation (6) et les images étant enregistrées par un capteur optique (8), **caractérisé en ce que** le capteur optique (8) est apte à se déplacer pendant l'enregistrement des images le long de la cuvette de circulation (6) et le contenu de la cellule de mesure peut alors être totalement ou partiellement représenté par une image.

14. Dispositif selon la revendication 13, **caractérisé en ce que** la source de lumière (1) et éventuellement des systèmes de diaphragmes et lentilles (2, 3, 4, 5) sont disposés d'un côté de la cuvette de circulation (6), de l'objectif (7) et éventuellement des systèmes de diaphragmes et le capteur optique (8) sont disposés de l'autre côté opposé de la cuvette de circulation (6).

15. Dispositif selon la revendication 13, **caractérisé en ce que** la source de lumière (1) et éventuellement des systèmes de diaphragmes et lentilles (2, 3, 4, 5) sont disposés du même côté de la cuvette de circulation (6) que l'objectif (7) et éventuellement les diaphragmes et le capteur optique (8).
